# EUROPEAN PATENT APPLICATION

(11) **EP 4 277 381 A1**
(43) Date of publication of application: **15.11.2023**
(21) Application number: 21917236.8
(22) Date of filing: 06.12.2021
(51) Int. Cl.: H04W 72/00

(54) **COMMUNICATION METHOD, BASE STATION, TERMINAL, AND STORAGE MEDIUM**

(30) Priority: 07.01.2021 CN 202110019137
(71) Applicant: Datang Mobile Communications Equipment Co., Ltd., Beijing 100085 (CN)
(72) Inventor: CHEN, Li, Beijing 100085 (CN); SUO, Shiqiang, Beijing 100085 (CN)
(74) Representative: Studio Torta S.p.A.
(86) International application number: PCT/CN2021/135708
(87) International publication number: WO 2022/148195

(57) **Abstract**

The embodiments of the present disclosure provide a communication method, a base station, a terminal, and a storage medium. The method includes controls, by the base station, the terminal having wireless sensing capability to communicate with the target cell, which is a cell that supports Integrated Sensing And Communication (ISAC). The embodiments of the present disclosure solve networking and communication problems in wireless communication caused by scarce spectrum resources are scarce, asymmetric uplink and downlink frequency is asymmetric, or coverage holes in uplink or downlink wireless communication by the wireless sensing technology.

## Description

### CROSS-REFERENCE TO RELATED APPLICATION

The present application claims priority to Chinese Patent Application No. 2021100191371, filed on January 07, 2021, entitled "Communication Method, Base Station, Terminal, and Storage Medium", which is incorporated herein by reference in its entirety.

### FIELD

The present disclosure relates to the technical field of communication, in particular to a communication method, a base station, a terminal, and a storage medium.

### BACKGROUND

With the development and popularization of wireless mobile communication technology, the type of users becomes diverse, and the number of users is increasing rapidly. The future wireless communication networks have the following characteristics: 1) dense networking is one of the basic networking ways of mobile communication networks, and a distance between network nodes and users as well as terminals in the Radio Access Network (RAN) is very short; 2) frequency resources are scarce, and research has been conducted on frequency bands such as terahertz and visible light. However, the available wireless communication frequency used in the 3GPP standard will not be sufficient for a long time, and due to spectrum policies and frequency usage in various countries and regions, the asymmetry of uplink and downlink frequency resources is very common.

At present, the same geographical area must have uplink and downlink frequency resource coverage of wireless communication to ensure reliable uplink and downlink transmission. For situations where spectrum resources are extremely asymmetric, such as only downlink carrier resources are available or downlink carrier bandwidth is extremely narrow, or only uplink carrier resources are available, it is not possible to independently form accessible cells.

Wireless sensing may be integrated into wireless communication networks so that it may utilize wireless sensing signals to transmit some of the signals required for communication when frequency resources are limited. However, it firstly requires to solve a problem how to converge wireless sensing into wireless communication networks to achieve reasonable networking.

### SUMMARY

Embodiments of the present disclosure provide a communication method, a base station, a terminal, and a storage medium to solve the problem of networking and communicating caused by scarce spectrum resources in wireless communication.

According to a first aspect of the present disclosure, a communication method is provided, which includes:
controlling, by a base station, a terminal having wireless sensing capability to communicate with a target cell, where the target cell is a cell that supports Integrated Sensing And Communication (ISAC).

According to a second aspect of the present disclosure, a communication method is provided, which includes:
communicating with a target cell when a terminal has wireless sensing capability, where the target cell is a cell that supports Integrated Sensing And Communication (ISAC).

According to a third aspect of the present disclosure, a base station is provided, which includes a memory, a transceiver, and a processor:
the memory is configured to store computer programs; the transceiver is configured to transmit and receive data under the control of the processor; the processor is configured to read computer programs in the memory and perform the following operations:
controlling, by a base station, a terminal having wireless sensing capability to communicate with the target cell, where the target cell is a cell that supports Integrated Sensing And Communication (ISAC).

According to a fourth aspect of the present disclosure, a terminal is provided, which includes a memory, a transceiver, and a processor:
the memory is configured to store computer programs; the transceiver is configured to transmit and receive data under the control of the processor; the processor is configured to read computer programs in the memory and perform the following operations:
communicating with a target cell when a terminal has wireless sensing capability, where the target cell is a cell that supports Integrated Sensing And Communication (ISAC).

According to a fifth aspect of the present disclosure, a communication apparatus is provided, which includes:
a communication module, configured to control, by a base station, a terminal having wireless sensing capability to communicate with a target cell, where the target cell is a cell that supports Integrated Sensing And Communication (ISAC).

According to a sixth aspect of the present disclosure, a communication apparatus is provided, which includes:
a communication module, configured to communicate with a target cell when the terminal has wireless sensing capability, where the target cell is a cell that supports Integrated Sensing And Communication (ISAC).

According to a seventh aspect of the present disclosure, a processor readable storage medium storing computer programs is provided, where the computer programs, when executed by a processor, cause the processor to perform the method described in the first or second aspect.

The communication method, base station, terminal, and storage medium provided in embodiments of the present disclosure practically integrates the wireless sensing technology into wireless communication networks by controlling terminals having wireless sensing capability to communicate with the target cell that supports Integrated Sensing And Communication (ISAC), which solves networking and communication problems in wireless communication caused by scarce spectrum resources, asymmetric uplink and downlink frequency, or coverage holes in uplink or downlink wireless communication .

### BRIEF DESCRIPTION OF THE DRAWINGS

To describe embodiments of the present disclosure or technical solutions much clearer, a brief description will be given to the accompanying drawings required in the description of the present embodiments or the prior art. It is apparent that the accompanying drawings in the following description are some embodiments of the present disclosure. For those ordinarily skilled in the art, other accompanying drawings may be obtained based on these drawings without any creative effort.
FIG. 1 is a flowchart of the steps of a communication method applied to a base station according to an embodiment of the present disclosure;
FIG. 2-1 is a first one of the schematic diagrams of the networking scenario according to an embodiment of the present disclosure;
FIG. 2-2 is a second one of the schematic diagrams of the networking scenario according to an embodiment of the present disclosure;

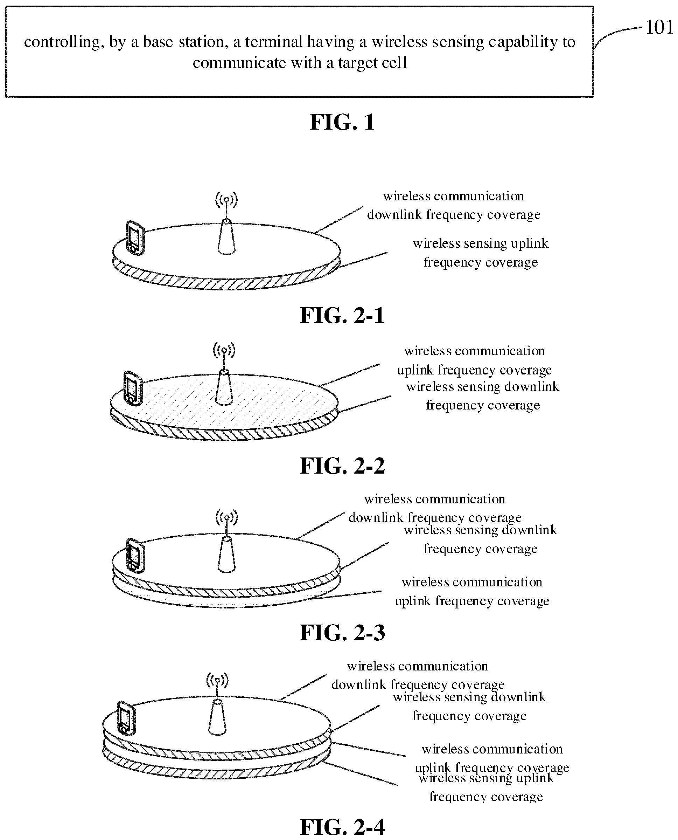

FIG. 2-3 is a third one of the schematic diagrams of the networking scenario according to embodiment of the present disclosure;
FIG. 2-4 is a fourth one of the schematic diagrams of the networking scenario according to an embodiment of the present disclosure;

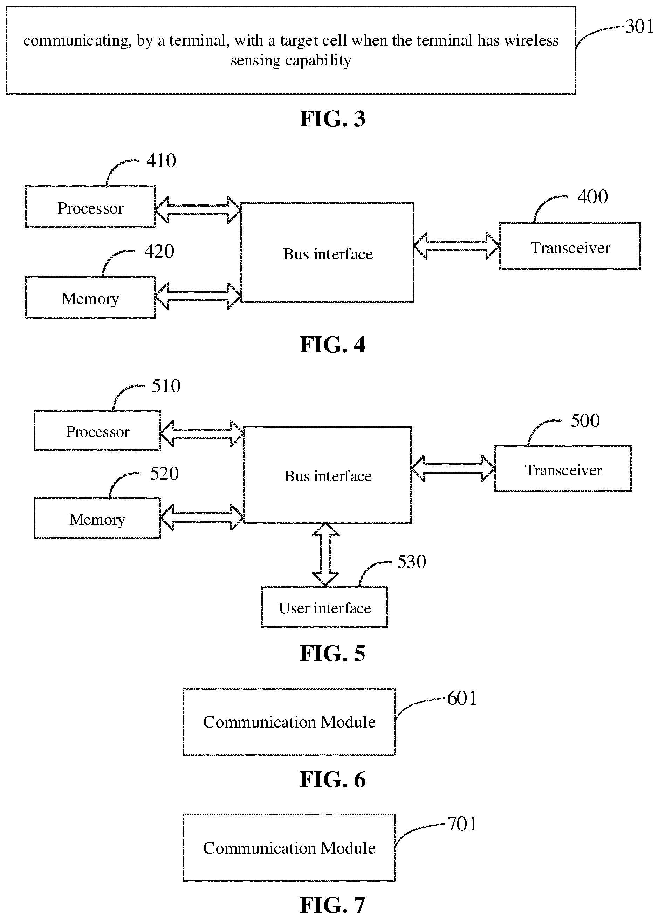

FIG. 3 is a flowchart of the steps of a communication method applied to a terminal according to an embodiment of the present disclosure;
FIG. 4 is a schematic diagram of the structure of a base station according to an embodiment of the present disclosure;
FIG. 5 is a schematic diagram of the structure of a terminal according to an embodiment of the present disclosure;
FIG. 6 is a module block diagram of a communication apparatus applied to a base station according to an embodiment of the present disclosure; and
FIG. 7 is a module block diagram of a communication apparatus applied to a terminal according to an embodiment of the present disclosure.

### DETAILED DESCRIPTION

The following provides a clear and complete description of the solution in embodiments of the present disclosure in conjunction with the accompanying drawings in embodiments of the present disclosure. The described embodiments are only a part of embodiments of the present disclosure and not all of them. All other embodiments obtained by those ordinarily skilled in the art without creative effort fall within the scope of protection of the present disclosure based on embodiments in the present disclosure.

The electromagnetic wave-based sensing (also referred to as wireless sensing) may sense factors such as a position, shape, size, posture, color, material, and environment of a target object. Common wireless sensing technologies include radar technology and imaging technology, etc. Radar may be divided into active radar and passive radar according to the transmission and reception ways. The active radar transmits electromagnetic waves and receives electromagnetic waves reflected back by the target to detect a target and obtain information; however, the passive radar does not generate radio frequency signals itself, and it may only receive signals for detecting and obtaining information when the detected target has electromagnetic wave signal radiation or reflects electromagnetic signals emitted by other devices. The light wave-based imaging technology mainly uses photosensitive materials to record information such as light intensity and color, which forms an image of an object. Users then use the formed image (photo) in digital image processing to obtain the required information. In addition to light waves, infrared and terahertz waves may also be used for wireless sensing, which are the focus of the future research. Similarly, waves in different frequencies may be transmitted with active or passive sensing methods.

The commonly mentioned wireless mobile networks, such as 4G and 5G, refer to wireless cellular networks under the 3GPP protocol. transmission between a RAN-side access point, such as a base station and terminal is performed through wireless signals. Wireless transmission is divided into uplink transmission and downlink transmission. The base station and terminal need to use the cell uplink and downlink resources configured on the base station side, and transmit and receive uplink and downlink data and signaling based on the wireless transmission parameters configured by the base station when the base station and terminal transmit data and signaling through the radio interface.

The terminal needs to first read the system messages transmitted from the base station in downlink direction whenever residing in or accessing a cell, and the terminal may access or reside in the cell only when it is determined that the cell has uplink and downlink frequency resources as well as other access conditions that may meet the requirements of the subsequent work of the terminal.

At present, the same geographical area must be covered by uplink and downlink frequency resources for wireless communication to ensure reliable uplink and downlink transmission. For situations where spectrum resources are extremely asymmetric, such as only downlink carrier resources are available or downlink carrier bandwidth is extremely narrow, or only uplink carrier resources are available, it is not possible to independently form accessible cells.

Therefore, embodiments of the present disclosure provide a communication method, a base station, a terminal, and a storage medium to solve the problem of inability to network when spectrum resources are asymmetric.

The method and apparatus are based on the same concept. Since principles of solving problem by the method and apparatus are similar, the implementation of the apparatus and method may be referred to each other, and any repetition will not be described.

The solution provided in embodiments of the present disclosure may be applicable to various systems, especially the 5G system. For example, applicable systems may be the global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, advanced long term evolution advanced (LTE-A) system, universal mobile telecommunication system (UMTS), global interoperability for microwave access (WiMAX) system, 5G New Radio (NR) system, etc. These various systems all include terminal devices and network devices. The system may also include core network parts, such as the Evolved Packet System (EPS) and 5G system (5GS), etc.

The terminal devices involved in embodiments of the present disclosure may be devices that provide voice and/or data connectivity to users, handheld devices having wireless connection functions, or other processing devices connected to wireless modems. In different systems, the names of terminal devices may also vary. For example, in the 5G system, terminal devices may be referred to as user equipment (UE). Wireless terminals may communicate with one or more core networks (CN) through a radio access network (RAN). Wireless terminals may be mobile terminals, such as mobile phones (or "cellular" phones) and computers with mobile terminals, such as portable, pocket, handheld mobile devices and mobile devices built in computers or mounted on cars. They exchange language and/or data with radio access networks. For example, personal communication service (PCS) telephone, cordless telephone, session initiated protocol (SIP) telephone, wireless local loop (WLL) station, personal digital assistant (PDA) and other devices. Wireless terminals may also be referred to as systems, subscriber units, subscriber stations, mobile stations, mobiles, remote stations, access points, remote terminals, access terminals, user terminals, user agents, user equipment etc., and they are not limited in embodiments of the present disclosure. Terminal devices are also considered as network devices in the present invention due to the fact that terminal devices, together with other network devices (such as core network devices, access network devices (i.e. base stations)), form a network that may support communication.

The network devices involved in embodiments of the present disclosure may be base stations, which may include a plurality of cells providing service to the terminal. According to different application scenarios, the base station may also be referred to as the access point, or may be the device in the access network that communicate with wireless terminals through one or more sectors in the air interface, or as other names. Network devices may be used to exchange the received air frames with Internet Protocol (IP) packets, serving as routers between wireless terminals and the rest of the access network, where the rest of the access network may include the Internet Protocol (IP) communication network. Network devices may also coordinate the attribute management of air interfaces. For example, the network device related to in embodiments of the present disclosure may be a base transceiver station (BTS) in the Global System for Mobile Communications (GSM) or code division multiple access (CDMA), or a network device (NodeB) in wide-band code division multiple access (WCDMA), and it may also be an evolutional Node B (eNB or e-NodeB) in a long term evolution (LTE) system, a 5G base station (gNB) in a 5G network architecture (next generation system), or a Home evolved Node B (HeNB), relay node, femto, pico, etc., and the present embodiments of the present disclosure are not limited to this. In some network structures, network devices may include centralized unit (CU) nodes and distributed unit (DU) nodes, and the centralized units and distributed units may also be disposed geographically separately.

In addition, the reference to " one embodiment" or "an embodiment" throughout the specification means that specific features, structures, or characteristics related to the present embodiments are included in at least one embodiment of the present disclosure. Therefore, the expressions "in one embodiment" or "in an embodiment" presenting throughout the entire specification may not necessarily refer to the same embodiment. In addition, these specific features, structures, or characteristics may be combined in one or more embodiments in any suitable manner.

Hereinafter is a specific explanation of the present disclosure.

As shown in FIG. 1, it is a flowchart of the communication method applied to a base station in embodiments of the present disclosure, the method includes the following steps:
Step 101: a base station controls a terminal having wireless sensing capability to communicate with a target cell.

In an embodiment, the target cell is a cell that supports Integrated Sensing And Communication (ISAC).

In an embodiment, the base station refers to an RAN node that performs wireless communication transmission with the terminal, and the base station may be a general base station, a distributed access point, integrated access backhaul (IAB) donor, IAB node, a relay, or a sidelink scheduling terminal or a sidelink transmitting terminal in vehicle to everything (V2X).

The terminal having wireless sensing capability refers to that the terminal is able to transmit information through wireless sensing.

Supporting Integrated Sensing And Communication (ISAC) refers to supporting the use of wireless sensing technology to participate in wireless communication transmission, i.e., supporting the data transmission using both wireless sensing technology and wireless communication technology simultaneously during the communication process.

The target cell is a cell that supports Integrated Sensing And Communication (ISAC), and a terminal having wireless sensing capability communicates with the target cell using both wireless sensing and wireless communication technologies simultaneously. It should be noted that the terminal having wireless sensing capability is required to first access the target cell for subsequent communication processes when the terminal having wireless sensing capability communicates with the target cell.

In this way, the present embodiment practically integrates the wireless sensing technology into wireless communication networks by controlling terminals having wireless sensing capability to communicate with cells that support Integrated Sensing And Communication (ISAC), which solves networking and communication problems in wireless communication caused by scarce spectrum resources are scarce, asymmetric uplink and downlink frequency is asymmetric, or coverage holes in uplink or downlink wireless communication.

The following describes situations of target cell being in different scenarios respectively.

In an embodiment, the target cell may include any one of the following: a first cell, a second cell, a third cell, and a fourth cell.

The first cell has wireless communication downlink frequency coverage and wireless sensing uplink frequency coverage in the base station coverage area.

As shown in FIG. 2-1, a base station coverage area may support the integrated transmission of downlink wireless communication and uplink wireless sensing when there are wireless communication downlink frequency coverage and wireless sensing uplink frequency coverage in the base station coverage area. That is, the first cell in this scenario may be used as the target cell.

At this point, when the base station controls a terminal having wireless sensing capability to communicate with the target cell, the method may include:
controlling the terminal to transmit uplink access related messages through uplink wireless sensing when the target cell is the first cell and the first cell is an independent working cell; or
allocating the wireless communication downlink frequency to the terminal and communicating with the terminal through uplink wireless sensing and downlink wireless communication when the target cell is the first cell, and the first cell is not an independent working cell and it is detected that the terminal connected to the base station supports uplink wireless sensing.

In an embodiment, in case that the first cell is not an independent working cell, the base station may allocate the wireless communication downlink frequency to the terminal connected to the first cell when the wireless sensing uplink frequency in the terminal is detected to be available, i.e., the terminal supports uplink wireless sensing. Thus, the base station can communicate with the terminal through uplink wireless sensing and downlink wireless communication.

When the first cell is an independent working cell, the base station may control the terminal to transmit uplink access related messages through uplink wireless sensing. For example, the base station may transmit instructions to the terminal for instructing the terminal to transmit uplink access related messages through uplink wireless sensing, which enables the terminal to access the base station and communicate in the wireless communication downlink independent coverage area by wireless sensing technology, and provides networking and communicating in such scenario.

The second cell has wireless communication uplink frequency coverage and wireless sensing downlink frequency coverage in the base station coverage area.

As shown in FIG. 2-2, a base station coverage area may support the integrated transmission of uplink wireless communication and downlink wireless sensing when there are wireless communication uplink frequency coverage and wireless sensing downlink frequency coverage in the base station coverage area. That is, the second cell in this scenario may be used as the target cell.

At this point, in case that the base station controls a terminal having wireless sensing capability to communicate with the target cell, the base station may allocate the wireless communication uplink frequency to the terminal and communicate with the terminal through downlink wireless sensing and uplink wireless communication when the target cell is the second cell and the second cell is not an independent working cell and it is detected that the terminal connected to the base station supports downlink wireless sensing.

In an embodiment, in case that the second cell is not an independent working cell, the base station may allocate the wireless communication uplink frequency to the terminal connected to the second cell when the wireless sensing downlink frequency in the terminal is detected to be available, i.e., when it is detected that the terminal supports downlink wireless sensing. Thus, the base station can communicate with the terminal through downlink wireless sensing and uplink wireless communication.

The third cell has wireless communication uplink frequency and downlink frequency coverage and wireless sensing downlink frequency coverage in the base station coverage area.

As shown in FIG. 2-3, a base station coverage area may support the integrated transmission of uplink wireless communication and downlink wireless communication and downlink wireless sensing when there are wireless communication uplink frequency and downlink frequency coverage and wireless sensing downlink frequency coverage in the base station coverage area. That is, the third cell in this scenario may be used as the target cell.

The fourth cell has wireless communication uplink frequency and downlink frequency coverage and wireless sensing uplink frequency and downlink frequency coverage in the base station coverage area.

As shown in FIG. 2-4, a base station coverage area may support the integrated transmission of uplink wireless communication and downlink wireless communication and uplink wireless sensing and downlink wireless sensing when there are wireless communication uplink frequency and downlink frequency coverage and wireless sensing uplink frequency and downlink frequency coverage in the base station coverage area. That is, the fourth cell in this scenario may be used as the target cell.

The base station notifies the terminal to communicate with the terminal through wireless sensing and wireless communication when the target cell is the third or fourth cell and it is detected that the terminal supports wireless sensing.

In an embodiment, the base station may transmit notifications directly to the terminal to notify the terminal to communicate with the terminal through wireless sensing and wireless communication when the target cell is the third or fourth cell and the base station controls the terminal to communicate with the target cell, which achieves the networking process of wireless sensing and wireless communication in this scenario.

In this way, the present embodiment integrates wireless sensing into wireless communication networks to form the four networking scenarios mentioned above, enabling terminals having wireless sensing capability to access any one of the networking scenarios mentioned above and communicate with cells in any one of the networking scenarios, which practically integrates wireless sensing technology into wireless communication networks.

Optionally, in the present embodiment, the base station may notify the terminal whether the current base station or cell supports wireless sensing and the supported first wireless sensing parameter through system messages or downlink messages.

The first wireless sensing parameter includes a wireless sensing direction, a wireless sensing signal type, a wireless sensing range and a wireless sensing type.

The wireless sensing direction includes the uplink wireless sensing or downlink wireless sensing. The wireless sensing type includes active sensing or passive sensing. The wireless sensing signal type refers to the type of signal or transmission corresponding to wireless communication.

In an embodiment, the system message is the system information block (SIB) message; in addition, the downlink messages may be DL Information Transfer. That is, the base station may notify the terminal whether the current base station or cell supports wireless sensing and the supported first wireless sensing parameter through system message SIB or downlink message such as DL Information Transfer, so that the terminal is enabled to clarify the wireless sensing situation of the current base station or cell according to the system message or downlink message, and determine whether the current base station or cell supports Integrated Sensing And Communication (ISAC), which provides a foundation for the terminal to access and communicate with the target cell.

The base station may perform terminal access control through wireless sensing access instructions in the system message.

Optionally, in the present embodiment, the base station also needs to receive a second wireless sensing parameter reported by the terminal, where the second wireless sensing parameter includes a wireless sensing direction, a wireless sensing signal type, a wireless sensing range, and a wireless sensing type.

In an embodiment, the terminal may report wireless sensing capability when accessing the wireless communication network, or report wireless sensing capability when wireless sensing is detected to be available, so that the base station may invoke wireless sensing when required and communicate with the terminal by referring to the wireless sensing parameters from the terminal.

In addition, optionally, in the present embodiment, the terminal may be handed over to other cells or the connection to the terminal may be released when it is determined that a change occurs in a wireless sensing capability of the terminal; where the change in the wireless sensing capability includes no longer supporting wireless sensing.

In an embodiment, the base station determines that wireless sensing capability of the terminal has changed, which means that the base station detects situations under which the terminal performs wireless sensing have changed, or receives indications of a change in wireless sensing capability transmitted from the terminal.

In addition, the change in wireless sensing capability may be the terminal being unable to perform wireless sensing to assist wireless communication, such as exceeding the range of wireless sensing. At this point, the terminal may be handed over to other cells or the connection to the terminal may be released.

In addition, optionally, in the present embodiment, the terminal is instructed through a redirection message to reselect other cells that support Integrated Sensing And Communication (ISAC) when the terminal is released to an idle state or inactive state.

In an embodiment, it may indicate information that the cell integrating wireless sensing may be reselected in the redirection message when the terminal is released to an idle state or inactive state by the base station. At this point, the terminal selects a cell that supports wireless sensing in cells that meet the channel quality conditions according to the redirection message that the terminal is released from the connected state to the idle state or inactive state and according to the terminal's capability and the need for use of wireless sensing signals, and is camped on the cell according to the cell selection and cell reselection procedures in the wireless communication.

In this way, the present embodiment solves networking and communication problems in wireless communication caused by scarce spectrum resources are scarce, asymmetric uplink and downlink frequency is asymmetric, or coverage holes in uplink or downlink wireless communication by controlling terminals having wireless sensing capability to communicate with cells that support Integrated Sensing And Communication (ISAC).

As shown in FIG. 3, it is a flowchart of the steps of a communication method applied to a terminal in embodiments of the present disclosure, the method includes the following steps:
Step 301: a terminal communicates with a target cell when the terminal has wireless sensing capability.

The target cell in step 301 is a cell that supports Integrated Sensing And Communication (ISAC).

In this way, the terminal communicates with the target cell that supports Integrated Sensing And Communication (ISAC) when the terminal has wireless sensing capability, which solves networking and communication problems in wireless communication caused by scarce spectrum resources are scarce, asymmetric uplink and downlink frequency is asymmetric, or coverage holes in uplink or downlink wireless communication.

The following describes situations of target cell being in different scenarios respectively.

In an embodiment, the target cell may include any one of the following: a first cell, a second cell, a third cell, and a fourth cell.

The first cell has wireless communication downlink frequency coverage and wireless sensing uplink frequency coverage in the base station coverage area.

In an embodiment, in case that the terminal has wireless sensing capability and communicates with the target cell, the terminal may transmit uplink access related messages through uplink wireless sensing when the target cell is the first cell and the first cell is an independent working cell; or receive the wireless communication downlink frequency allocated by the base station accessed by the terminal and communicate with the first cell through uplink wireless sensing and downlink wireless communication when the target cell is the first cell and the first cell is not an independent working cell and the terminal supports uplink wireless sensing.

The second cell has wireless communication uplink frequency coverage and wireless sensing downlink frequency coverage in the base station coverage area.

In an embodiment, in case that the terminal has wireless sensing capability and communicates with the target cell, the terminal may receive the wireless communication uplink frequency allocated by the base station accessed by the terminal, and communicate with the second cell through downlink wireless sensing and uplink wireless communication when the target cell is the second cell and the second cell is not an independent working cell and the terminal supports downlink wireless sensing.

The third cell has wireless communication uplink frequency and downlink frequency coverage and wireless sensing downlink frequency coverage in the base station coverage area.

The fourth cell has wireless communication uplink frequency and downlink frequency coverage and wireless sensing uplink frequency and downlink frequency coverage in the base station coverage area.

In an embodiment, in case that the terminal has wireless sensing capability and communicates with the target cell, the terminal may receive notification information transmitted from the base station accessed by the terminal when the target cell is the third or fourth cell. The notification information is sent when the base station detects that the terminal supports wireless sensing, and the notification information is used to notify the terminal to communicate with the third or fourth cell through wireless sensing and wireless communication.

It should be noted that specific description for the target cell in various scenarios mentioned above may be found in the corresponding content of the base station side, and these will not be further elaborated on here.

Optionally, in the present embodiment, the base station further needs to receive the system message or the downlink message, where the system message or the downlink message is used to notify the terminal whether the current base station or cell supports wireless sensing and the supported first wireless sensing parameter.

The first wireless sensing parameter includes a wireless sensing direction, a wireless sensing signal type, a wireless sensing range and a wireless sensing type.

In addition, the terminal also needs to report a second wireless sensing parameter to the base station accessed by the terminal, where the second wireless sensing parameter includes a wireless sensing direction, a wireless sensing signal type, a wireless sensing range, and a wireless sensing type.

It should be noted that specific description r according to embodiments mentioned above may be found in the corresponding content of the base station side, and these will not be further elaborated on here.

In addition, optionally, in the present embodiment, when wireless sensing capability of the terminal has changed, the terminal may be handed over to other cells or the connection to the terminal may be released; where the change in the wireless sensing capability includes no longer supporting wireless sensing.

In addition, the terminal may receive redirection messages transmitted from the base station accessed by the terminal when the terminal is in an idle state or inactive state; where the redirection message may be used to instruct the terminal to reselect other cells that support Integrated Sensing And Communication (ISAC).

In this way, the present disclosure practically integrates wireless sensing technology into wireless communication networks, and solves networking and communication problems in wireless communication caused by scarce spectrum resources are scarce, asymmetric uplink and downlink frequency is asymmetric, or coverage holes in uplink or downlink wireless communication by the above-mentioned embodiments.

The following describes the present disclosure with specific embodiments.

A first embodiment is for the scenario of the third and fourth cells.

First, the base station indicates in the system message SIB that the base station supports integrated transmission of wireless sensing and wireless communication, and indicates the supported first wireless sensing parameter.

Then, the terminal receives the system message from the base station, determines that the cell supports Integrated Sensing And Communication (ISAC) as well as the supported first wireless sensing parameter; and transmits a connection establishment request to the base station when the access conditions (such as channel quality conditions) are met.

Then, the base station receives the connection establishment request transmitted from the terminal, obtains terminal identity information from the connection establishment request from the terminal, and obtains terminal capability information from the core network or base station storage to determine whether the terminal supports wireless sensing and the supported second wireless sensing parameter.

A notification is transmitted to the terminal indicating that the terminal participates in the wireless communication transmission process through wireless sensing when it is detected that the terminal may perform a wireless sensing process (such as detecting distance, signal strength, etc. that meets wireless sensing conditions) or when the base station receives a wireless sensing capability indication transmitted from the terminal side that the terminal may currently assist communication transmission through wireless sensing signals. The notification may include a specific process and/or steps in the process, and a specific parameter corresponding to which type of wireless communication signaling.

Finally, the terminal receives notifications indicating that the base station instructs the terminal to participate in the wireless communication transmission process through wireless sensing, i.e., to receive notifications indicating that the terminal communicates with the third or fourth cell through wireless sensing and wireless communication; Integrated Sensing And Communication (ISAC) is performed when it is detected that the terminal may perform wireless sensing process. Before this, optionally, the terminal may report the terminal's wireless sensing capability to the base station to indicate that the terminal may currently assist communication transmission through wireless sensing signals.

The second embodiment is for the scenario of the first cell:
First, the base station indicates in the system message SIB that the current cell is the first cell only having wireless communication downlink frequency coverage and wireless sensing uplink frequency coverage, and indicates that the current cell supports wireless sensing and the supported wireless sensing parameters.

Then, the terminal receives system messages from the base station, determines whether the current terminal may perform the wireless sensing process required for assisting wireless communication, and if so, transmits a connection establishment request to the base station through the wireless sensing signal.

Then, the base station receives the connection establishment request transmitted from the terminal through wireless sensing signals, and transmits downlink signaling to notify the terminal that the connection establishment is completed and configures transmission parameters.

Then, the terminal receives the connection establishment instructions from the base station and completes the procedure corresponding to the base station configuration.

Optionally, the base station detects changes in situations under which the terminal performs the wireless sensing transmission, or receives notifications of changes in wireless sensing capability transmitted from the terminal. If the terminal is unable to perform wireless sensing for assisting wireless communication, such as exceeding the range of wireless sensing, the terminal is handed over to another cell or the terminal's connection is released.

The terminal hands over or releases the connection with the current cell according to the instructions from the base station; if the terminal detects on its own that the terminal is unable to perform the wireless sensing process required for assisting wireless communication, the terminal may report the change in the wireless sensing capability to the base station or release the connection with the current cell on its own.

The third embodiment is for scenarios where the first and second cells are not independent working cells:
First, the base station establishes a connection with the terminal through other RATs or other cells to obtain terminal's capability and determine whether the terminal supports uplink or downlink wireless sensing and the corresponding parameters. The base station configures the wireless communication downlink frequency band or wireless communication uplink frequency band for the terminal, configure the parameters required for the corresponding wireless sensing process, and assists data and signaling transmission through wireless sensing when the base station detects that the terminal is currently able to perform the corresponding wireless sensing process for assisting wireless communication, including wireless sensing capability indications detected by the base station or transmitted from the terminal.

Then, the terminal receives the wireless communication downlink frequency band or wireless communication uplink frequency band configuration configured by the base station as well as the parameters required in corresponding wireless sensing process. The terminal transmits data and signaling through wireless sensing assistance. Before this, optionally, the terminal reports its current wireless sensing capability to the base station.

In addition, optionally, the base station detects changes in situations under which the terminal performs the wireless sensing transmission, or receives notifications of changes in wireless sensing capability transmitted from the terminal. If the terminal is unable to perform wireless sensing for assisting wireless communication, such as exceeding the range of wireless sensing, the terminal is handed over to another cell or the terminal's connection is released.

The terminal hands over or releases the connection with the current cell according to the instructions of the base station; if the terminal detects on its own that the terminal is unable to perform the wireless sensing process required for assisting wireless communication, the terminal may report the change in wireless sensing capability to the base station or release the connection with the current cell on its own.

The fourth embodiment is for the scenario of the third cell, and the downlink wireless communication resource frequency band is very narrow:

First, the base station indicates the downlink bandwidth of the current cell and indicates that the cell supports wireless sensing and the supported wireless sensing parameters in the system message SIB.

Then, the terminal receives system messages from the base station, determines whether the current terminal may perform the wireless sensing process required for assisting wireless communication, and if so, transmits a connection establishment request to the base station.

Then, the base station receives the connection establishment request transmitted from the terminal, transmits a downlink signaling to notify the terminal of the completion of the connection establishment and configure the transmission parameters, including specific configuration information that may be used for subsequent downlink transmission through wireless sensing signals.

Then, the terminal receives the connection establishment instructions from the base station and completes the process corresponding to the base station configuration.

In addition, optionally, the base station detects changes in situations under which the terminal performs the wireless sensing transmission, or receives notifications of changes in wireless sensing capability transmitted from the terminal. If the terminal is unable to perform wireless sensing for assisting wireless communication, such as exceeding the range of wireless sensing, the terminal is handed over to another cell or the connection to the terminal is released.

The terminal hands over or releases the connection with the current cell according to the instructions from the base station; If the terminal detects on its own that the terminal is unable to perform the wireless sensing process required for assisting wireless communication, the terminal may report the change in wireless sensing capability to the base station or release the connection with the current cell on its own.

The fifth embodiment is for the scenario of the third and fourth communities:

The base station indicates that Integrated Sensing And Communication (ISAC) are supported and the supported wireless sensing parameters in the system message SIB; or the terminal may indicate information that the cell converging wireless sensing may be reselected in the redirection message when the terminal is released to an idle state or inactive state by the base station.

The terminal receives system messages from the base station, or selects the cell that supports wireless sensing from cells that meet channel quality conditions according to the terminal's capability and the need for use of wireless sensing signals based on the information in the redirection message that the terminal is released from the connected state to the idle state or inactive state, and is camped on cell according to the cell selection and cell reselection procedures in the wireless communication.

The present disclosure practically integrates wireless sensing technology into wireless communication networks through any one of the above embodiments.

FIG. 4 is a schematic diagram of the structure of a base station in embodiments of the present disclosure, the base station includes a memory 420, a transceiver 400, and a processor 410.

In FIG. 4, the bus architecture may include any number of interconnected buses and bridges, and in detail, the bus architecture is linked together by one or more processors represented by the processor 410 and various circuits of memory represented by the memory 420. The bus architecture may also link various other circuits such as peripheral devices, voltage stabilizers and power management circuits together, which is well-known in the art. Therefore, they will not be further described herein. A bus interface provides interfaces. The transceiver 400 may be a plurality of components, i.e., including a transmitter and a receiver, providing a unit for communicating with various other devices on a transmission medium including wireless channels, wired channels, optical cables, and other transmission media. The processor 410 is responsible for managing the bus architecture and general processing, and the memory 420 may store data used by the processor 410 during operations are executed.

The processor 410 may be a central processing unit (CPU), application specific integrated circuit (ASIC), field-programmable gate array (FPGA) or complex programmable logic device (CPLD). The processor may be also a multi-core architecture.

The memory 420 is configured to store computer programs; the transceiver 400 is configured to transmit and receive data under the control of the processor; the processor 410 is configured to read computer programs in the memory and perform the following operations:
the base station controls the terminal having wireless sensing capability to communicate with a target cell, the target cell is a cell that supports Integrated Sensing And Communication (ISAC).

Optionally, the target cell includes any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area;
a fourth cell having wireless communication uplink frequency and downlink frequency coverage and wireless sensing uplink frequency and downlink frequency coverage in the base station coverage area.

Optionally, the base station controls the terminal having wireless sensing capability to communicate with the target cell, the computer programs, when executed by the processor, cause the base station to perform the step of:
controlling the terminal to transmit uplink access related messages through uplink wireless sensing when the target cell is the first cell and the first cell is an independent working cell; or,
allocating the wireless communication downlink frequency to the terminal and communicating with the terminal through uplink wireless sensing and downlink wireless communication when the target cell is the first cell, which is not an independent working cell and it is detected that the terminal connected to the base station supports uplink wireless sensing; or,
allocating the wireless communication uplink frequency to the terminal and communicate with the terminal through downlink wireless sensing and uplink wireless communication when the target cell is the second cell and the second cell is not an independent working cell and it is detected that the terminal connected to the base station supports downlink wireless sensing.

Optionally, the base station controls the terminal having wireless sensing capability to communicate with the target cell, the computer programs, when executed by the processor, cause the base station to perform the step of:
notifying the terminal of communicating with the terminal through wireless sensing and wireless communication when the target cell is the third or fourth cell and it is detected that the terminal supports wireless sensing.

Optionally, the computer programs, when executed by the processor, cause the base station to further perform the step of: handing over the terminal to other cells or the connection of the terminal is released when it is determined that the wireless sensing capability of the terminal has changed; where the change in the wireless sensing capability include no longer supporting wireless sensing.

Optionally, the computer programs, when executed by the processor, cause the base station to further perform the step of: instructing the terminal to reselect other cells that support Integrated Sensing And Communication (ISAC) through a redirection message when the terminal is released to an idle state or inactive state.

Optionally, the computer programs, when executed by the processor, cause the base station to further perform the step of: notifying the terminal whether the current base station or cell supports wireless sensing and the supported first wireless sensing parameter through system messages or downlink messages; the first wireless sensing parameter includes a wireless sensing direction, a wireless sensing signal type, a wireless sensing range and a wireless sensing type.

Optionally, the computer programs, when executed by the processor, cause the base station to further perform the step of: receiving the second wireless sensing parameter reported by the terminal, where the second wireless sensing parameter includes a wireless sensing direction, a wireless sensing signal type, a wireless sensing range, and a wireless sensing type.

FIG. 5 is a schematic diagram of the structure of a terminal in embodiments of the present disclosure.

In FIG. 5, the bus architecture may include any number of interconnected buses and bridges, and in detail, the bus architecture is linked together by one or more processors represented by the processor 510 and various circuits of memory represented by the memory 520. The bus architecture may also link various other circuits such as peripheral devices, voltage stabilizers, and power management circuits together, which are well-known in the art. Therefore, they will not be further described herein. A bus interface provides interfaces. The transceiver 500 may be a plurality of components, i.e., including a transmitter and a receiver, providing a unit for communicating with various other devices on a transmission medium including wireless channels, wired channels, optical cables, and other transmission media. For different user equipment, the user interface 530 may also be an interface that may connect external and internal devices, including but not limited to small keyboards, monitors, speakers, microphones, joysticks, etc.

The processor 510 is responsible for managing the bus architecture and general processing, while the memory 520 may store data used by the processor 510 during operations are executed.

Optionally, the processor 510 may be a central processing unit (CPU), application specific integrated circuit (ASIC), field-programmable gate array (FPGA) or complex programmable logic device (CPLD). The processor may be also a multi-core architecture.

The memory 520 is configured to store computer programs; the transceiver 500 is configured to transmit and receive data under the control of the processor; the processor 510 performs the following steps according to the obtained executable instructions by calling computer programs stored in memory:

The terminal communicates with a target cell when the terminal has wireless sensing capability, where the target cell is a cell that supports Integrated Sensing And Communication (ISAC).

Optionally, the target cell includes any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area;
a fourth cell having wireless communication uplink frequency and downlink frequency coverage and wireless sensing uplink frequency and downlink frequency coverage in the base station coverage area.

Optionally, the terminal communicates with the target cell when the terminal has wireless sensing capability, the computer programs, when executed by the processor, cause the base station to perform the step of:
transmitting, by the terminal, uplink access related messages through uplink wireless sensing when the target cell is the first cell and the first cell is an independent working cell; or
receiving the wireless communication downlink frequency allocated by the base station accessed by the terminal and communicating with the first cell through uplink wireless sensing and downlink wireless communication when the target cell is the first cell and the first cell is not an independent working cell and the terminal supports uplink wireless sensing; or
receiving the wireless communication uplink frequency allocated by the base station accessed by the terminal, and communicating with the second cell through downlink wireless sensing and uplink wireless communication when the target cell is the second cell and the second cell is not an independent working cell and the terminal supports downlink wireless sensing.

Optionally, the terminal communicates with the target cell when the terminal has wireless sensing capability, the computer programs, when executed by the processor, cause the base station to perform the step of:
receiving, by the terminal, notification information transmitted from the base station accessed by the terminal when the target cell is the third or fourth cell, where the notification information is sent when the base station detects that the terminal supports wireless sensing, and is used to notify the terminal of communicating with the third or fourth cell through wireless sensing and wireless communication.

Optionally, the computer programs, when executed by the processor, cause the base station to further perform the step of: handing over the terminal to other cells or the connection of the terminal is released when the wireless sensing capability of the terminal has changed; where the change in the wireless sensing capability includes no longer supporting wireless sensing.

Optionally, the computer programs, when executed by the processor, cause the base station to further perform the step of: receiving the redirection message transmitted from the base station accessed by the terminal when the terminal is in an idle state or inactive state; where the redirection message is used to instruct the terminal to reselect other cells that support Integrated Sensing And Communication (ISAC).

Optionally, the computer programs, when executed by the processor, cause the base station to further perform the step of: receiving system messages or downlink messages, the system messages or downlink messages is used to notify the terminal whether the current base station or cell supports wireless sensing and the supported first wireless sensing parameter; the first wireless sensing parameter includes a wireless sensing direction, a wireless sensing signal type, a wireless sensing range and a wireless sensing type.

Optionally, the computer programs, when executed by the processor, cause the base station to further perform the step of: reporting the second wireless sensing parameter to the base station accessed by the terminal, where the second wireless sensing parameter includes a wireless sensing direction, a wireless sensing signal type, a wireless sensing range, and a wireless sensing type.

FIG. 6 is a module block diagram of a communication apparatus applied to a base station in embodiments of the present disclosure, the apparatus includes:
a communication module 601, configured to control a terminal having wireless sensing capability to communicate with the target cell, where the target cell is a cell that supports Integrated Sensing And Communication (ISAC).

Optionally, the target cell includes any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area;
a fourth cell having wireless communication uplink frequency and downlink frequency coverage and wireless sensing uplink frequency and downlink frequency coverage in the base station coverage area.

Optionally, in particular, the communication module is configured to:
control the terminal to transmit uplink access related messages through uplink wireless sensing when the target cell is the first cell and the first cell is an independent working cell; or
allocate the wireless communication downlink frequency to the terminal and communicating with the terminal through uplink wireless sensing and downlink wireless communication when the target cell is the first cell, which is not an independent working cell and it is detected that the terminal connected to the base station supports uplink wireless sensing; or
allocate the wireless communication uplink frequency to the terminal and communicate with the terminal through downlink wireless sensing and uplink wireless communication when the target cell is the second cell and the second cell is not an independent working cell and it is detected that the terminal connected to the base station supports downlink wireless sensing.

Optionally, the communication module is configured to:
notify the terminal to communicate with the terminal through wireless sensing and wireless communication when the target cell is the third or fourth cell and it is detected that the terminal supports wireless sensing.

Optionally, the communication apparatus further includes:
a handover module, configured to hand over the terminal to other cells or release the connection to the terminal when it is determined that the wireless sensing capability of the terminal has changed;
where the change in the wireless sensing capability includes no longer supporting wireless sensing.

Optionally, the communication apparatus further includes:
a reselecting module, configured to instruct the terminal to reselect other cells that support Integrated Sensing And Communication (ISAC) through a redirection message when the terminal is released to an idle state or inactive state.

Optionally, the communication apparatus further includes:
a notifying module, configured to notify the terminal whether the current base station or cell supports wireless sensing and the supported first wireless sensing parameter through system messages or downlink messages;
the first wireless sensing parameter includes a wireless sensing direction, a wireless sensing signal type, a wireless sensing range and a wireless sensing type.

Optionally, the communication apparatus further includes:
a receiving module, configured to receive the second wireless sensing parameter reported by the terminal, where the second wireless sensing parameter includes a wireless sensing direction, a wireless sensing signal type, a wireless sensing range, and a wireless sensing type.

FIG. 7 is a module block diagram of a communication apparatus applied to a terminal in embodiments of the present disclosure, the apparatus includes:
a communication module 701, configured to communicate with the target cell when the terminal has wireless sensing capability, where the target cell is a cell that supports Integrated Sensing And Communication (ISAC).

Optionally, the target cell includes any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area;
a fourth cell having wireless communication uplink frequency and downlink frequency coverage and wireless sensing uplink frequency and downlink frequency coverage in the base station coverage area.

Optionally, in particular, the communication module is configured to:
control the terminal to transmit uplink access related messages through uplink wireless sensing when the target cell is the first cell and the first cell is an independent working cell; or
receive the wireless communication downlink frequency allocated by the base station accessed by the terminal and communicate with the first cell through uplink wireless sensing and downlink wireless communication when the target cell is the first cell and the first cell is not an independent working cell and the terminal supports uplink wireless sensing; or
receive the wireless communication uplink frequency allocated by the base station accessed by the terminal, and communicate with the second cell through downlink wireless sensing and uplink wireless communication when the target cell is the second cell and the second cell is not an independent working cell and the terminal supports downlink wireless sensing.

Optionally, in particular, the communication module is configured to:
control the terminal to receive notification information transmitted from the base station accessed by the terminal when the target cell is the third or fourth cell, where the notification information is transmitted when the base station detects that the terminal supports wireless sensing, and the notification information is used to notify the terminal of communicating with the third or fourth cell through wireless sensing and wireless communication.

Optionally, the communication apparatus further includes:
a handover module, configured to hand over to other cells or release the connection to the terminals when the wireless sensing capability of the terminal has changed;
where the change in the wireless sensing capability includes no longer supporting wireless sensing.

Optionally, the communication apparatus further includes:
a first receiving module, configured to receive the redirection message transmitted from the base station accessed by the terminal when the terminal is in an idle state or inactive state; where the redirection message is used to instruct the terminal to reselect other cells that support Integrated Sensing And Communication (ISAC).

Optionally, the communication apparatus further includes:
a second receiving module, configured to receive system messages or downlink messages, the system messages or downlink messages is used to notify the terminal whether the current base station or cell supports wireless sensing and the supported first wireless sensing parameter;
where the first wireless sensing parameter includes a wireless sensing direction, a wireless sensing signal type, a wireless sensing range and a wireless sensing type.

Optionally, the communication apparatus further includes:
a reporting module, configured to report the second wireless sensing parameter to the base station accessed by the terminal, where the second wireless sensing parameter includes a wireless sensing direction, a wireless sensing signal type, wireless sensing range, and a wireless sensing type.

It should be noted that the division of units in embodiments of the present disclosure is schematic and only serves as a logical function division. In actual implementation, there may be other division methods. In addition, each functional unit in various embodiments of the present disclosure may be integrated in one processing unit, or each unit may exist physically individually, or two or more units may be integrated into one unit. The integrated unit mentioned above may be implemented in forms of hardware or software functional units.

If the integrated unit is implemented in the form of a software functional unit and sold or used as an independent product, the integrated unit may be stored in a processor readable storage medium. Based on this understanding, the technical solution disclosed in the present disclosure or the part making contributions to the prior art, or all or part of the technical solutions may essentially be reflected in the form of a software product, which is stored in storage media. The storage media include several instructions to enable a computer device (which may be a personal computer, server, or network device, etc.) or processor to execute all or part of the steps of the methods described in various embodiments of the present disclosure. The aforementioned storage media include: USB flash drives, mobile hard drives, Read-Only Memory (ROM), Random Access Memory (RAM), magnetic disks or optical disks, and other media that may store program codes.

It should be noted that the above devices provided in embodiments of the present disclosure may achieve all the method steps implemented in the above method embodiments, and may achieve the same effect. The same parts and beneficial effects as method embodiments in the present embodiment will not be further elaborated on in detail.

On the other hand, embodiments of the present disclosure also provide a processor readable storage medium, where the processor readable storage medium stores computer programs for causing the processor to execute methods described in above embodiments.

The processor readable storage medium may be any available medium or data storage device that the processor may access, including but not limited to magnetic memory (such as floppy disks, hard disks, magnetic tapes, magneto-optical disks (MO), etc.), optical memory (such as CD, DVD, BD, HVD, etc.), and semiconductor memory (such as ROM, EPROM, EEPROM, non-volatile memory (NAND FLASH), solid-state drive (SSD), etc.).

It may be seen from the above embodiments that the processor readable storage medium stores computer programs used to cause the processor to execute aforementioned communication methods.

Those skilled in the art should understand that embodiments of the present disclosure may be provided as methods, systems, or computer program products. Therefore, the present disclosure may take the form of complete hardware embodiments, complete software embodiments, or embodiments combining software and hardware aspects. Moreover, the present disclosure may take the form of computer program products implemented on one or more computer available storage media (including but not limited to magnetic disk memory, optical memory, etc.) containing computer available program codes.

The present disclosure is described with reference to the flowchart and/or block diagram of the methods, devices (systems), and computer program products according to embodiments of the present disclosure. It should be understood that each process and/or block in a flowchart and/or block diagram as well as the combination of processes and/or blocks in the flowchart and/or block diagram, may be implemented by computer executable instructions. The computer executable instructions may be provided to processors of general-purpose computers, specialized computers, embedded processors, or other programmable data processing devices to generate a machine, causing instructions executed by processors of computers or other programmable data processing devices to generate devices for implementing functions specified in a process or a plurality of processes of flowcharts and/or a block or a plurality of blocks of block diagrams.

The processor executable instructions may also be stored in processor readable memory that may guide computers or other programmable data processing devices to work in a particular way, causing the instructions stored in the processor readable memory to generate manufactured products including instruction devices that implement the functions specified in a process or a plurality of processes of flowcharts and/or a block or a plurality of blocks of block diagrams.

The processor executable instructions may also be loaded onto computers or other programmable data processing devices to perform a series of operation steps on the computer or other programmable devices to generate the process of computer implementation. Thus, the instructions executed on the computer or other programmable devices provide steps for implementing the functions specified in a process or a plurality of processes of flowcharts and/or a block or a plurality of blocks of block diagrams.

Those skilled in the art may make various modifications and variations to the present disclosure without departing from the scope of the present disclosure. In this way, if the modifications and variations of the present disclosure fall within the scope of the claims and their equivalent technologies, the present disclosure also intends to include the modifications and variations.

## Claims

1. A communication method, **characterized by** comprising:
controlling, by a base station, a terminal having a wireless sensing capability to communicate with a target cell, wherein the target cell is a cell that supports Integrated Sensing And Communication (ISAC).

2. The communication method of claim 1, wherein the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

3. The communication method of claim 2, wherein the controlling, by the base station, the terminal having wireless sensing capability to communicate with the target cell comprises:
controlling the terminal to transmit uplink access related messages through uplink wireless sensing when the target cell is the first cell and the first cell is an independent working cell; or
allocating the wireless communication downlink frequency to the terminal and communicating with the terminal through uplink wireless sensing and downlink wireless communication when the target cell is the first cell, and the first cell is not an independent working cell and it is detected that the terminal connected to the base station supports uplink wireless sensing; or
allocating the wireless communication uplink frequency to the terminal and communicating with the terminal through downlink wireless sensing and uplink wireless communication when the target cell is the second cell and the second cell is not an independent working cell and it is detected that the terminal connected to the base station supports downlink wireless sensing.

4. The communication method of claim 2, wherein the controlling, by the base station, the terminal having wireless sensing capability to communicate with the target cell comprises:
notifying the terminal to communicate with the terminal through wireless sensing and wireless communication when the target cell is the third cell or the fourth cell and it is detected that the terminal supports wireless sensing.

5. The communication method of any one of claims 1-4, further comprising:
handing over the terminal to other cells or releasing a connection to the terminal when it is determined that a change occurs in a wireless sensing capability of the terminal;
wherein the change in the wireless sensing capability includes no longer supporting wireless sensing.

6. The communication method of any one of claims 1-4, further comprising:
instructing the terminal to reselect other cells that support Integrated Sensing And Communication (ISAC) through a redirection message when the terminal is released to an idle state or inactive state.

7. The communication method of any one of claims 1-4, further comprising:
notifying the terminal whether a current base station or cell supports wireless sensing and the supported first wireless sensing parameter through system messages or downlink messages;
wherein the first wireless sensing parameter comprises a wireless sensing direction, a wireless sensing signal type, a wireless sensing range and a wireless sensing type.

8. The communication method of any one of claims 1-4, further comprising:
receiving a second wireless sensing parameter reported by the terminal, wherein the second wireless sensing parameter comprises a wireless sensing direction, a wireless sensing signal type, a wireless sensing range, and a wireless sensing type.

9. A communication method, **characterized by** comprising:
communicating, by a terminal, with a target cell when the terminal has wireless sensing capability, wherein the target cell is a cell that supports Integrated Sensing And Communication (ISAC).

10. The communication method of claim 9, wherein the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

11. The communication method of claim 10, wherein the communicating, by the terminal, with the target cell when the terminal has wireless sensing capability comprises:
transmitting, by the terminal, uplink access related messages through uplink wireless sensing when the target cell is the first cell and the first cell is an independent working cell; or
receiving the wireless communication downlink frequency allocated by the base station accessed by the terminal, and communicating with the first cell through the uplink wireless sensing and the downlink wireless communication when the target cell is the first cell and the first cell is not an independent working cell and the terminal supports uplink wireless sensing; or
receiving the wireless communication uplink frequency allocated by the base station accessed by the terminal, and communicating with the second cell through the downlink wireless sensing and the uplink wireless communication when the target cell is the second cell and the second cell is not an independent working cell and the terminal supports downlink wireless sensing.

12. The communication method of claim 10, wherein the communicating, by the terminal, with the target cell when the terminal has wireless sensing capability comprises:
receiving, by the terminal, notification information transmitted from the base station accessed by the terminal when the target cell is the third cell or the fourth cell, wherein the notification information is transmitted when the base station detects that the terminal supports wireless sensing, and the notification information is used to notify the terminal to communicate with the third cell or the fourth cell through wireless sensing and wireless communication.

13. The communication method of any one of claims 9-12, further comprising:
handing over the terminal to other cells or releasing a connection to the terminal when a change occurs in a wireless sensing capability of the terminal;
wherein the change in the wireless sensing capability includes no longer supporting wireless sensing.

14. The communication method of any one of claims 9-12, further comprising:
receiving redirection messages transmitted from the base station accessed by the terminal when the terminal is in an idle state or inactive state; wherein the redirection message is used to instruct the terminal to reselect other cells that support Integrated Sensing And Communication (ISAC).

15. The communication method of any one of claims 9-12, further comprising:
receiving system messages or downlink messages, wherein the system messages or downlink messages are used to notify the terminal whether the current base station or cell supports wireless sensing and the supported first wireless sensing parameter;
wherein the first wireless sensing parameter comprises a wireless sensing direction, a wireless sensing signal type, a wireless sensing range and a wireless sensing type.

16. The communication method of any one of claims 9-12, further comprising:
reporting the second wireless sensing parameter to the base station accessed by the terminal, wherein the second wireless sensing parameter comprises a wireless sensing direction, a wireless sensing signal type, a wireless sensing range, and a wireless sensing type.

17. A base station, **characterized by** comprising:
a memory configured to store computer programs;
a processor configured to read computer programs stored in the memory; and
a transceiver configured to transmit and receive data under the control of the processor,
wherein the computer programs, when executed by the processor, cause the base station to:
control a terminal having a wireless sensing capability to communicate with a target cell, wherein the target cell is a cell that supports Integrated Sensing And Communication (ISAC).

18. The base station of claim 17, **characterized in that**, the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

19. The base station of claim 18, wherein the computer programs, when executed by the processor, further cause the base station to:
control the terminal to transmit uplink access related messages through uplink wireless sensing when the target cell is the first cell and the first cell is an independent working cell; or
allocate the wireless communication downlink frequency to the terminal and communicate with the terminal through uplink wireless sensing and downlink wireless communication when the target cell is the first cell, and the first cell is not an independent working cell and it is detected that the terminal connected to the base station supports uplink wireless sensing; or
allocate the wireless communication uplink frequency to the terminal and communicate with the terminal through downlink wireless sensing and uplink wireless communication when the target cell is the second cell and the second cell is not an independent working cell and it is detected that the terminal connected to the base station supports downlink wireless sensing.

20. The base station of claim 18, wherein the computer programs, when executed by the processor, further cause the base station to:
notify the terminal to communicate with the terminal through wireless sensing and wireless communication when the target cell is the third cell or the fourth cell and it is detected that the terminal supports wireless sensing.

21. The base station of any one of claims 17- 20, wherein the computer programs, when executed by the processor, further cause the base station to:
hand over the terminal to other cells or releasing a connection to the terminal when it is determined that a change occurs in a wireless sensing capability of the terminal;
wherein the change in the wireless sensing capability includes no longer supporting wireless sensing.

22. The base station of any one of claims 17- 20, wherein the computer programs, when executed by the processor, further cause the base station to:
instruct the terminal to reselect other cells that support Integrated Sensing And Communication (ISAC) through a redirection message when the terminal is released to an idle state or inactive state.

23. The base station of any one of claims 17- 20, wherein the computer programs, when executed by the processor, further cause the base station to:
notify the terminal whether a current base station or cell supports wireless sensing and the supported first wireless sensing parameter through system messages or downlink messages;
wherein the first wireless sensing parameter comprises a wireless sensing direction, a wireless sensing signal type, a wireless sensing range and a wireless sensing type.

24. The base station of any one of claims 17- 20, wherein the computer programs, when executed by the processor, further cause the base station to:
receive a second wireless sensing parameter reported by the terminal, wherein the second wireless sensing parameter comprises a wireless sensing direction, a wireless sensing signal type, a wireless sensing range, and a wireless sensing type.

25. A terminal, **characterized by** comprising:
a memory configured to store computer programs;
a processor configured to read computer programs stored in the memory; and
a transceiver configured to transmit and receive data under the control of the processor;
wherein the computer programs, when executed by the processor, cause the terminal to:
communicate with a target cell when the terminal has wireless sensing capability, wherein the target cell is a cell that supports Integrated Sensing And Communication (ISAC).

26. The terminal of claim 25, wherein the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

27. The terminal of claim 26, wherein the computer programs, when executed by the processor, further cause the terminal to:
transmit uplink access related messages through uplink wireless sensing when the target cell is the first cell and the first cell is an independent working cell; or
receive the wireless communication downlink frequency allocated by the base station accessed by the terminal, and communicate with the first cell through the uplink wireless sensing and the downlink wireless communication when the target cell is the first cell and the first cell is not an independent working cell and the terminal supports uplink wireless sensing; or
receive the wireless communication uplink frequency allocated by the base station accessed by the terminal, and communicate with the second cell through the downlink wireless sensing and the uplink wireless communication when the target cell is the second cell and the second cell is not an independent working cell and the terminal supports downlink wireless sensing.

28. The terminal of claim 26, wherein the computer programs, when executed by the processor, further cause the terminal to:
receive notification information transmitted from the base station accessed by the terminal when the target cell is the third cell or the fourth cell, wherein the notification information is transmitted when the base station detects that the terminal supports wireless sensing, and the notification information is used to notify the terminal to communicate with the third cell or the fourth cell through wireless sensing and wireless communication.

29. The terminal of any one of claims 25- 28, wherein the computer programs, when executed by the processor, further cause the terminal to:
hand over to other cells or releasing a connection to the terminal when a change occurs in a wireless sensing capability of the terminal;
wherein the change in the wireless sensing capability includes no longer supporting wireless sensing.

30. The terminal of any one of claims 25- 28, wherein the computer programs, when executed by the processor, further cause the terminal to:
receive redirection messages transmitted from the base station accessed by the terminal when the terminal is in an idle state or inactive state; wherein the redirection message is used to instruct the terminal to reselect other cells that support Integrated Sensing And Communication (ISAC).

31. The terminal of any one of claims 25- 28, wherein the computer programs, when executed by the processor, further cause the terminal to:
receive system messages or downlink messages, wherein the system messages or downlink messages are used to notify the terminal whether the current base station or cell supports wireless sensing and the supported first wireless sensing parameter;
wherein the first wireless sensing parameter comprises a wireless sensing direction, a wireless sensing signal type, a wireless sensing range and a wireless sensing type.

32. The terminal of any one of claims 25- 28, wherein the computer programs, when executed by the processor, further cause the terminal to:
report the second wireless sensing parameter to the base station accessed by the terminal, wherein the second wireless sensing parameter comprises a wireless sensing direction, a wireless sensing signal type, a wireless sensing range, and a wireless sensing type.

33. A communication apparatus, **characterized by** comprising:
a communication module, configured to control, by a base station, a terminal having a wireless sensing capability to communicate with a target cell, wherein the target cell is a cell that supports Integrated Sensing And Communication (ISAC).

34. The communication apparatus of claim 33, wherein the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

35. The communication apparatus of claim 34, wherein the communication apparatus is further configured to:
control the terminal to transmit uplink access related messages through uplink wireless sensing when the target cell is the first cell and the first cell is an independent working cell; or
allocate the wireless communication downlink frequency to the terminal and communicating with the terminal through uplink wireless sensing and downlink wireless communication when the target cell is the first cell, and the first cell is not an independent working cell and it is detected that the terminal connected to the base station supports uplink wireless sensing; or
allocate the wireless communication uplink frequency to the terminal and communicating with the terminal through downlink wireless sensing and uplink wireless communication when the target cell is the second cell and the second cell is not an independent working cell and it is detected that the terminal connected to the base station supports downlink wireless sensing.

36. The communication apparatus of claim 34, wherein the communication apparatus is further configured to:
notify the terminal to communicate with the terminal through wireless sensing and wireless communication when the target cell is the third cell or the fourth cell and it is detected that the terminal supports wireless sensing.

37. The communication apparatus of any one of claims 33-36, further comprising:
a handover module, configured to hand over the terminal to other cells or releasing a connection to the terminal when it is determined that a change occurs in a wireless sensing capability of the terminal;
wherein the change in the wireless sensing capability includes no longer supporting wireless sensing.

38. The communication apparatus of any one of claims 33-36, further comprising:
a reselecting module, configured to instruct the terminal to reselect other cells that support Integrated Sensing And Communication (ISAC) through a redirection message when the terminal is released to an idle state or inactive state.

39. The communication apparatus of any one of claims 33-36, further comprising:
a notifying module, configured to notify the terminal whether a current base station or cell supports wireless sensing and the supported first wireless sensing parameter through system messages or downlink messages;
wherein the first wireless sensing parameter comprises a wireless sensing direction, a wireless sensing signal type, a wireless sensing range and a wireless sensing type.

40. The communication apparatus of any one of claims 33-36, further comprising:
a receiving module, configured to receive a second wireless sensing parameter reported by the terminal, wherein the second wireless sensing parameter comprises a wireless sensing direction, a wireless sensing signal type, a wireless sensing range, and a wireless sensing type.

41. A communication apparatus, **characterized by** comprising:
a communication module, configured to communicate with a target cell when the terminal has wireless sensing capability, wherein the target cell is a cell that supports Integrated Sensing And Communication (ISAC).

42. A communication apparatus, **characterized by** comprising:
communicating with a target cell when the terminal has wireless sensing capability, wherein the target cell is a cell that supports Integrated Sensing And Communication (ISAC).

43. The communication apparatus according to claim 42, **characterized in that**, the target cell comprises any one of the following:
a first cell having wireless communication downlink frequency coverage and wireless sensing uplink frequency coverage in the base station coverage area;
a second cell having wireless communication uplink frequency coverage and wireless sensing downlink frequency coverage in the base station coverage area;
a third cell having wireless communication uplink frequency and downlink frequency coverage and wireless sensing downlink frequency coverage in the base station coverage area; and
a fourth cell having wireless communication uplink frequency and downlink frequency coverage and wireless sensing uplink frequency and downlink frequency coverage in the base station coverage area.

44. The communication apparatus of claim 43, **characterized in that**, the terminal communicates with the target cell when the terminal has wireless sensing capability, comprising:
transmit uplink access related messages through uplink wireless sensing when the target cell is the first cell and the first cell is an independent working cell; or
receive the wireless communication downlink frequency allocated by the base station accessed by the terminal, and communicate with the first cell through the uplink wireless sensing and the downlink wireless communication when the target cell is the first cell and the first cell is not an independent working cell and the terminal supports uplink wireless sensing; or
receive the wireless communication uplink frequency allocated by the base station accessed by the terminal, and communicate with the second cell through the downlink wireless sensing and the uplink wireless communication when the target cell is the second cell and the second cell is not an independent working cell and the terminal supports downlink wireless sensing.

45. The communication apparatus of claim 43, wherein the terminal communicates with the target cell when the terminal has wireless sensing capability, comprising:
receive notification information transmitted from the base station accessed by the terminal when the target cell is the third cell or the fourth cell, wherein the notification information is transmitted when the base station detects that the terminal supports wireless sensing, and the notification information is used to notify the terminal to communicate with the third cell or the fourth cell through wireless sensing and wireless communication.

46. The communication apparatus of any one of claims 42-45, further comprising:
hand over to other cells or releasing a connection to the terminal when a change occurs in a wireless sensing capability of the terminal;
wherein the change in the wireless sensing capability includes no longer supporting wireless sensing.

47. The communication apparatus of any one of claims 42-45, further comprising:
receive redirection messages transmitted from the base station accessed by the terminal when the terminal is in an idle state or inactive state; wherein the redirection message is used to instruct the terminal to reselect other cells that support Integrated Sensing And Communication (ISAC).

48. The communication apparatus of any one of claims 42-45, further comprising:
receive system messages or downlink messages, wherein the system messages or downlink messages are used to notify the terminal whether the current base station or cell supports wireless sensing and the supported first wireless sensing parameter;
wherein the first wireless sensing parameter comprises a wireless sensing direction, a wireless sensing signal type, a wireless sensing range and a wireless sensing type.

49. The communication apparatus of any one of claims 42-45, further comprising:
report the second wireless sensing parameter to the base station accessed by the terminal, wherein the second wireless sensing parameter comprises a wireless sensing direction, a wireless sensing signal type, a wireless sensing range, and a wireless sensing type.

50. A processor readable storage medium, **characterized in that**, the processor readable storage medium stores computer programs, wherein the computer programs, when executed by a processor, cause the processor to perform methods of any one of claims 1-8, or methods of any one of claims 9-16.
